# EUROPÄISCHE PATENTSCHRIFT

(11) **EP 1 076 467 B1**
(45) Veröffentlichungstag und Bekanntmachung des Hinweises auf die Patenterteilung: **12.07.2006**
(21) Anmeldenummer: 00117009.1
(22) Anmeldetag: 08.08.2000
(51) Int. Cl.: H04Q 7/38

(54) **Verfahren zur Basisstationswechsel (Handover) für mobile Endgeräte**
Cellular handoff method for mobile terminals
Procédé de transfert de cellule pour terminaux mobiles

(30) Priorität: 09.08.1999 DE 19937508
(43) Veröffentlichungstag der Anmeldung: 14.02.2001
(73) Patentinhaber: SIEMENS AKTIENGESELLSCHAFT, 80333 München (DE)
(72) Erfinder: Jahn, Alfred, 81373 München (DE)

(56) Entgegenhaltungen:
- EP-A- 0 700 167
- WO-A-98/09468
- WO-A-99/25146
- US-A- 5 913 166

## Beschreibung

Bei vielen Kommunikationssystemen werden Endgeräte, die zu unterschiedlichen Zwecken, wie z.B. einem Übertragen von Sprach-, Video-, Fax-, Multimedia-, Informations-, Text-, Programm- und/oder Meßdaten dienen können, in zunehmendem Ma-βe drahtlos angekoppelt. Eine Verbindung zu derartigen mobilen Endgeräten wird üblicherweise über sog. Basisstationen erstellt, die einerseits über eine Luftschnittstelle mit den mobilen Endgeräten in Verbindung treten können und andererseits über ein Vermittlungssystem an ein Kommunikationsnetz angekoppelt sind. Unter mobilen Endgeräten werden im folgenden auch sog. schnurlose Endgeräte verstanden.

Zur Ansteuerung von Basisstationen durch ein Vermittlungssystem sind gegenwärtig unterschiedliche Methoden gebräuchlich. Nach einer ersten Methode werden Basisstationen über eine im allgemeinen als Ergänzung des Vermittlungssystems vorgesehenen Funkvermittlungsbaugruppe mit dem eigentlichen Vermittlungssystem gekoppelt. Diese Art der Ankopplung ist insbesondere bei Anschaltung mehrerer Basisstationen, die ein gemeinsames multizellulares Funknetz bilden, gebräuchlich. Ein in einem solchen Funknetz registriertes, mobiles Endgerät kann dabei zwischen den jeweils in Funkreichweite befindlichen Basisstationen dieses Funknetzes beliebig wechseln. Der Bereich um eine Basisstation in dem eine drahtlose Verbindung zwischen einem mobilen Endgerät und dieser Basisstation herstellbar ist, wird auch als Funkzelle dieser Basisstation bezeichnet. Eine jeweils aktuelle Zuordnung von mobilen Endgeräten zu Basisstationen eines Funknetzes und alle mit einem Basisstationswechsel verbundenen Vorgänge werden von der Funkvermittlungsbaugruppe gesteuert. Aufgrund der eigenständigen Verwaltung der Endgerätemobilität durch die Funkvermittlungsbaugruppe kann als eigentliches Vermittlungssystem auch ein für drahtgebundene Kommunikation ausgelegtes Vermittlungssystem verwendet werden. Eine Funkvermittlungsbaugruppe wird seitens eines solchen Vermittlungssystems in der Regel wie eine Gruppe von drahtgebundenen Endgeräten angesteuert. Eine Ansteuerung von Basisstationen über eine Funkvermittlungsbaugruppe ist beispielsweise aus "Cordless Telecommunications in Europe" von Wally H.W. Tuttlebee (Ed.), Springer Verlag, London, 1990, Seiten 43 bis 48 und 256 bis 258 bekannt.

Nach einer zweiten gebräuchlichen Methode kann eine Basisstation direkt, d.h. ohne Zwischenschaltung einer Funkvermittlungsbaugruppe, über eine Endgeräteschnittstelle an ein Vermittlungssystem angeschlossen sein. Eine solche Art der Anschaltung wird häufig für ein monozellulares Funknetz, z.B. bei Schnurlostelefonen oder drahtlos angebundenen Tischtelefonen eingesetzt. Die Basisstation wird dabei vom Vermittlungssystem, wie ein Endgerät angesteuert, dem eine Endgeräterufnummer zugeordnet ist. Verbindungsanforderungen an ein mobiles Endgerät werden vom Vermittlungssystem anhand der Rufnummer der Basisstation bis zur Basisstation vermittelt. Für den weiteren Verbindungsaufbau bis zu einem mobilen Endgerät ist dagegen die Basisstation zuständig. Eine solche Art der Basisstationsanschaltung wird beispielsweise in der Telekommunikationsanlage "HICOM Cordless S" der Fa. Siemens AG eingesetzt.

Beide obengenannten Arten der Basisstationsanschaltung erlauben es, durch jeweils spezifische Verfahren die Basisstation über die eine Verbindung zu einem mobilen Endgerät verläuft, innerhalb eines Funknetzes zu wechseln. Ein solcher Basisstationswechsel bei bestehender Verbindung wird häufig auch als Handover bezeichnet. Da insbesondere bei einem größeren Vermittlungssystem oft beide Arten der Basisstationsanschaltung gleichzeitig realisiert sind, besteht jedoch vielfach das Bedürfnis, bei bestehender Verbindung auch zwischen Basisstationen wechseln zu können, die auf unterschiedliche Art an das Vermittlungssystem angeschlossen sind.

Aus dem Dokument US 5913166 ist ein Verfahren zum Wechseln einer Verbindung zwischen einer an eine herkömmliche Vermittlungsstation angeschlossenen, ersten Basisstation zu einer an eine Funkvermittlung angeschlossenen, zweiten Basisstation bekannt. Dieses Verfahren erfordert jedoch eine Verwaltung von Zugriffskodes durch die erste Basisstation sowie durch ein jeweiliges mobiles Endgerät.

Es ist Aufgabe der vorliegenden Erfindung, ein verbessertes Verfahren zum Wechseln einer eine Verbindung von einem Vermittlungssystem zu einem mobilen Endgerät weiterleitenden Basisstation anzugeben, das einen Wechsel zwischen einer Basisstation, die von dem Vermittlungssystem wie ein Endgerät angesteuert wird, zu einer Basisstation, die vom Vermittlungssystem über eine Funkvermittlungsbaugruppe angesteuert wird, erlaubt.

Gelöst wird diese Aufgabe durch ein Verfahren mit den Merkmalen des Patentanspruchs 1.

Es sei an dieser Stelle darauf hingewiesen, daß die in Patentanspruch 1 angegebene Reihenfolge der Verfahrensschritte nicht notwendigerweise deren zeitlicher Reihenfolge entsprechen muß.

Die Erfindung erlaubt ein Handover eines mobilen Endgerätes zwischen von einem Vermittlungssystem unterschiedlich angesteuerten Basisstationen, die auch verschiedenen Funknetzen angehören können. Damit können auch einzelne, direkt an das Vermittlungssystem angeschaltete Basisstationen in ein funknetzübergreifendes Handover-Konzept einbezogen werden. Ein Direktanschluß einer Basisstation erfordert keine Zwischenschaltung einer Funkvermittlungsbaugruppe. Eine solche Zwischenschaltung würde insbesondere bei einem nur eine einzige oder wenige Basisstationen aufweisenden Funknetz einen unverhältnismäßig hohen Schaltungsaufwand erfordern. Bei einer direkt angeschlossenen und wie ein leitungsgebundenes Endgerät angesteuerten Basisstation können zudem auf einfache Weise für leitungsgebundene Kommunikation vorgesehene Leistungsmerkmale des Vermittlungssystems auch vom mobilen Endgerät aus genutzt werden.

Bei Basisstationen, die über eine Funkvermittlungsbaugruppe an ein Vermittlungssystem angeschlossen sind, steuert und verwaltet die Funkvermittlungsbaugruppe, die mit einem Handover in Zusammenhang stehenden Abläufe und entlastet so das Vermittlungssystem. Die Verwaltung dieser Abläufe wird häufig auch als Mobility-Management bezeichnet.

Das erfindungsgemäße Verfahren kann unabhängig von einer Ursache, die zu einem Basisstationswechsel führt, eingesetzt werden; so z.B. für einen Basisstationswechsel aufgrund eines Funkzellenwechsels des mobilen Endgerätes, aufgrund einer Verbindungsübergabe an ein zu einem anderen Funknetz gehörigen mobilen Endgerät, aufgrund eines Ausfalls der Verbindung über eine erste Basisstation oder nur Nutzung eines Leistungsmerkmals, das nur über ein anderes Funknetz zugänglich ist. Zur Durchführung des erfindungsgemäßen Verfahrens werden nur solche Leistungsmerkmale eines Vermittlungssystems benötigt, die im Zusammenhang mit leitungsgebundener Kommunikation an sich bekannt sind und somit in bestehenden, für leitungsgebundene Kommunikation ausgelegten Vermittlungssystemen üblicherweise bereits vorhanden sind. Das erfindungsgemäße Verfahren läßt sich vorteilhaft mit unterschiedlichen Vermittlungssystemen kombinieren, wie z.B. mit Nebenstellenanlagen, Vermittlungsstationen, sog. LAN-Servern oder logisch eingerichteten Vermittlungssystemen.

Vorteilhafte Ausführungsformen und Weiterbildungen der Erfindung sind in den Unteransprüchen angegeben.

Zum Wiederaufnehmen einer gehaltenen Verbindung über eine zweite Basisstation kann im Vermittlungssystem das z.B. im Euro-ISDN-Standard definierte Leistungsmerkmal "Direktansprechen" aktiviert werden. Damit wird die gehaltene Verbindung über die Funkvermittlungsbaugruppe und die zweite Basisstation zum mobilen Endgerät durchgeschaltet, ohne daß eine explizite Verbindungsannahme am mobilen Endgerät erforderlich ist.

Weiterhin kann nach Wiederaufnahme einer gehaltenen Verbindung die erste Geräteadressierungsinformation für nachfolgende Verbindungsanforderungen freigegeben werden.

Nach einer vorteilhaften Ausführungsform der Erfindung prüft das Vermittlungssystem eine Zuordnung der zweiten Geräteadressierungsinformation zu einer ersten Geräteadressierungsinformation anhand eines Teilnehmerspeichers des Vermittlungssystems, in dem Geräteadressierungsinformationen Teilnehmern zugeordnet sind. Geräteadressierungsinformationen gelten in diesem Sinne als einander zugeordnet, falls sie im Teilnehmerspeicher demselben Teilnehmer zugeordnet sind. Da eine Verwaltung eines Teilnehmerspeichers bei zeitgemäßen Vermittlungssystemen üblich ist, erfordert eine Implementierung dieser Art von Zuordnungsprüfung nur einen geringen Aufwand. Vor der Durchführung des Verfahrens sind lediglich die der ersten Basisstation zugeordnete erste Geräteadressierungsinformation und die dem mobilen Endgerät zugeordnete zweite Geräteadressierungsinformation demselben Teilnehmer im Teilnehmerspeicher zuzuordnen.

Alternativ dazu können erste und zweite Geräteadressierungsinformationen einander durch ihre Zugehörigkeit zur selben Anrufübernahmegruppe zugeordnet sein.

Nach einer vorteilhaften Weiterbildung der Erfindung kann zur Identifizierung des mobilen Endgerätes gegenüber der zweiten Basisstation eine Gerätekennung des mobilen Endgerätes von diesem zur zweiten Basisstation übertragen werden. Anhand der Gerätekennung kann dann die zweite Geräteadressierungsinformation ermittelt werden, unter der das mobile Endgerät im Vermittlungssystem registriert ist. Alternativ dazu kann zur Identifizierung des mobilen Endgerätes die Geräteadressierungsinformation vom mobilen Endgerät selbst zur zweiten Basisstation übertragen werden, wodurch eine Ermittlung der zweiten Geräteadressierungsinformation aus einer Gerätekennung unnötig wird.

Das erfindungsgemäße Verfahren läßt sich besonders einfach mit bestehendem Kommunikationssystemkomponenten realisieren, wenn als Geräteadressierungsinformation jeweils eine Rufnummer verwendet wird.

Nach einer weiteren vorteilhaften Weiterbildung der Erfindung weist die erste Basisstation einen für das mobile Endgerät reservierten drahtlosen Übertragungskanal auf. Damit kann eine Verbindungsaufnahme dieses mobilen Endgerätes nicht durch andere verbindungssuchende, mobile Endgeräte blockiert werden. Auf diese Weise kann durch das Einrichten von Basisstationen mit für bestimmte mobile Endgeräte reservierten Funkkanälen diesen mobilen Endgeräten ein Verbindungsaufbau zumindest zwischen den mobilen Endgeräten und dem Vermittlungssystem garantiert werden. Durch das erfindungsgemäße Verfahren können auch solche zu Sonderzwecken eingerichtete Basisstationen in ein funknetzübergreifendes Handoverkonzept einbezogen werden.

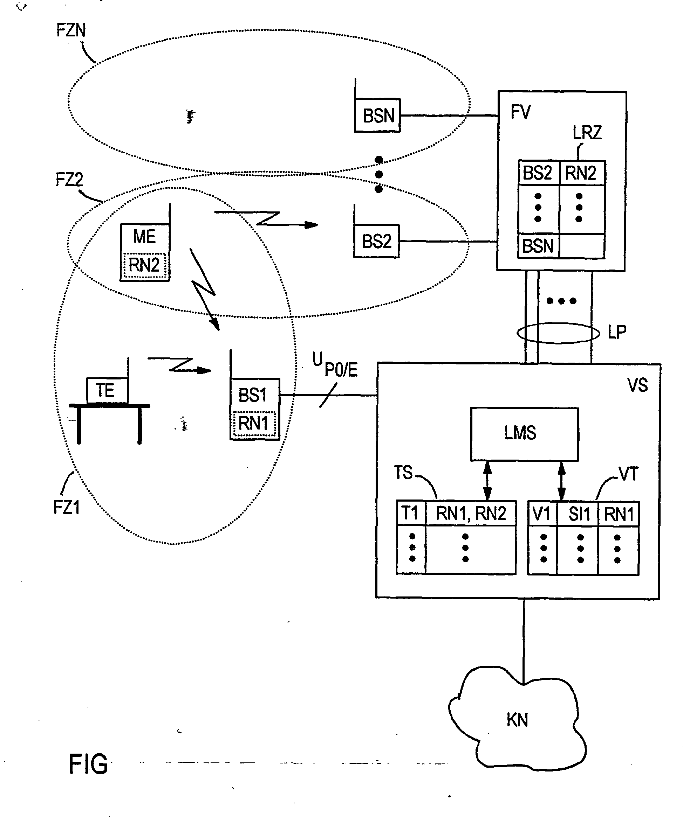

Die Erfindung wird nachfolgend anhand eines Ausführungsbeispiels unter Bezugnahme auf die Figur näher erläutert.

Die FIG zeigt ein Kommunikationssystem zur drahtlosen Kommunikation mit mehreren Basisstationen in schematischer Darstellung.

In der FIG ist ein Kommunikationssystem mit einem an ein Kommunikationsnetz KN angeschlossenen Vermittlungssystem VS, an das Basisstationen BS1,...,BSN angekoppelt sind, schematisch dargestellt. Das Vermittlungssystem VS weist dabei eine Leistungsmerkmalsteuerung LMS mit Zugriff auf einen Teilnehmerspeicher TS und eine Verbindungstabelle VT auf. Die Basisstationen BS1,...,BSN verfügen jeweils über eine Luftschnittstelle, z.B. gemäß DECT-Standard. Während die Basisstation BS1 direkt über eine U_{P0/E}-Schnittstelle an das Vermittlungssystem VS angeschlossen ist, sind die Basisstationen BS2 bis BSN über eine Funkvermittlungsbaugruppe FV an das Vermittlungssystem VS gekoppelt. Die Funkvermittlungsbaugruppe FV ist dabei über mehrere logische Ports LP an das Vermittlungssystem VS angeschlossen. Die Funkvermittlungsbaugruppe FV kann alternativ auch als Baugruppe im Vermittlungssystem VS integriert sein. Im Sinne einer übersichtlicheren Darstellung und einer deutlicheren Funktionstrennung wird im vorliegenden Ausführungsbeispiel indessen eine externe Funkvermittlungsbaugruppe FV betrachtet.

Die Funkzellen FZ1,...,FZN der Basisstationen BS1,...,BSN sind jeweils durch eine punktierte Ellipse angedeutet.

Durch die direkt an das Vermittlungssystem VS angeschlossene Basisstation BS1 wird ein monozellulares, erstes Funknetz, z.B. gemäß DECT-Standard, realisiert, in dessen einziger Funkzelle FZ1 sich ein drahtlos an die Basisstation BS1 angekoppeltes Tischendgerät TE sowie ein mobiles Endgerät ME befinden. Die Endgeräte TE und ME sind in der Basisstation BS1 als zu deren Funknetz gehörig registriert und verfügen jeweils über einen fest reservierten Funkkanal zur Basisstation BS1. Die Basisstation BS1 emuliert dem Vermittlungssystem VS gegenüber ein Endgerät, dem eine Rufnummer RN1 zugeordnet ist. Die Anschaltung der Basisstation BS1 an das Vermittlungssystem VS über die U_{P0/E}-Schnittstelle erlaubt es, außer Leistungsmerkmalen gemäß Euro-ISDN-Standard auch Leistungsmerkmale gemäß dem sog. Cornet-TS-Protokoll im Vermittlungssystem VS zu aktivieren. Diese Leistungsmerkmale können damit auch von den drahtlos angekoppelten Endgeräten TE und ME aus genutzt werden.

Anrufe mit Zielrufnummer RN1 werden vom Vermittlungssystem VS zur Basisstation BS1 vermittelt, die für die weitere Vermittlung dieser Verbindungen zum Tischendgerät TE bzw. zum mobilen Endgerät ME zuständig ist. Für die Zielrufnummer RN1 eintreffende Verbindungsanforderungen können beispielsweise von der Basisstation BS1 an beiden Endgeräten TE und ME signalisiert werden und die Verbindung anschließend zu demjenigen Endgerät ME oder TE durchgeschaltet werden, von dem aus die Verbindungsanforderung zuerst angenommen wird.

Das mobile Endgerät ME befindet sich weiterhin auch in der Funkzelle FZ2 der Basisstation BS2, das einem multizellularen, zweiten Funknetz, z.B. gemäß DECT-Standard, mit den Basisstationen BS2,...,BSN angehört. Das mobile Endgerät ME ist auch zur Verbindungsaufnahme über dieses zweite Funknetz eingerichtet und in der Basisstation BS2 als zur Verbindungsaufnahme über dieses zweite Funknetz berechtigt registriert. Dem mobilen Endgerät ME ist eine zweite Rufnummer RN2 zugeordnet, mittels der das mobile Endgerät über das zweite Funknetz erreichbar ist. Eine an das mobile Endgerät ME gerichtete Verbindungsanforderung mit der Zielrufnummer RN2 wird vom Vermittlungssystem VS zur Funkvermittlungsbaugruppe FV weitergegeben. Diese verwaltet eine Lage/Rufnummern-Zuordnungstabelle LRZ, in der eine jeweilige Rufnummer eines jeden im zweiten Funknetz registrierten mobilen Endgerätes derjenigen Basisstation zugeordnet abgespeichert ist, in deren Funkzelle sich das betreffende mobile Endgerät momentan befindet. Im vorliegenden Ausführungsbeispiel ist in der Lage/Rufnummern-Zuordnungstabelle LRZ die Rufnummer RN2 der Basisstation BS2 zugeordnet. Zum Weitervermitteln einer an die Zielrufnummer RN2 gerichteten Verbindungsanforderung wird die Lage/Rufnummern-Zuordnungstabelle LRZ nach der Zielrufnummer RN2 durchsucht und die zugeordnete Basisstation, hier BS2, ermittelt. Die Verbindungsanforderung wird von der Funkvermittlungsbaugruppe FV daraufhin an diese Basisstation, hier BS2, weitergeleitet, die anschließend eine Verbindung zum mobilen Endgerät ME aufbaut.

Im folgenden sei eine in der Praxis häufig auftretende Situation betrachtet, bei der eine zwischen dem Tischendgerät TE und einem Teilnehmer im Kommunikationsnetz KN bestehende, über die Basisstation BS1 und das Vermittlungssystem VS verlaufende Verbindung an das mobile Endgerät ME übergeben wird, das anschließend vom ersten Funknetz in das zweite Funknetz wechselt. Die Übergabe der Verbindung vom Tischendgerät TE an das mobile Endgerät ME wird innerhalb des ersten Funknetzes allein von der Basisstation BS1, z.B. im Rahmen des DECT-Protokolls, verwaltet. Die Basisstation BS1 trennt zu diesem Zweck die Verbindung zum Tischendgerät TE und schaltet die Verbindung zum mobilen Endgerät ME durch. Zur anschließenden Verlagerung des Verbindungsverlaufs, der zu diesem Zeitpunkt noch über die Basisstation BS1 führt, zum Verlauf über eine Basisstation, hier BS2, des zweiten Funknetzes, meldet sich das mobile Endgerät ME z.B. gemäß DECT-Protokoll bei der Basisstation BS2 an und identifiziert sich bei dieser durch Übermittlung einer eindeutigen Gerätekennung. Die Basisstation BS2 meldet anschließend die erfolgte Identifizierung des mobilen Endgerätes ME an die Funkvermittlungsbaugruppe FV. Diese bestimmt aus der übermittelten Gerätekennung, die dem mobilen Endgerät ME im zweiten Funknetz zugeordnete Rufnummer RN2 und trägt diese in der Lage/Rufnummern-Zuordnungstabelle LRZ, zugeordnet zur Basisstation BS2 ein. Vom mobilen Endgerät ME wird weiterhin ein Steuersignal an die Basisstation BS1 gesendet, wodurch diese veranlaßt wird, ein Leistungsmerkmal des Vermittlungssystems zum Trennen und Halten einer Verbindung zu aktivieren. Das Steuersignal kann beispielsweise automatisch bei Verlassen der Funkzelle FZ1 gesendet werden. Die Aktivierung des Leistungsmerkmals erfolgt vorzugsweise gemäß einem standardisierten Signalisierungsprotokoll, wie z.B. dem QSIG-Protokoll oder dem DSS1-Protokoll gemäß ETSI-Standard, oder auch gemäß einem proprietären Signalisierungsprotokoll, wie z.B. dem Cornet-TS-Protokoll. Durch das aktivierte Leistungsmerkmal wird die über das Vermittlungssystem VS und die Basisstation BS1 verlaufende Verbindung durch das Vermittlungssystem VS getrennt und in dieser der Rufnummer RN1 der Basisstation BS1 zugeordnet gehalten. Im Vermittlungssystem VS werden gehaltene Verbindungen anhand der Verbindungstabelle VT verwaltet, in der für jede aktuelle Verbindung V1,... eine jeweils zugeordnete Statusinformation SI1,... und zumindest eine der Verbindung zugeordnete Zielrufnummer RN1,... gespeichert sind. Im vorliegenden Ausführungsbeispiel wird in der Verbindungstabelle VT durch die Leistungsmerkmalsteuerung LMS für die gehaltene Verbindung V1 eine den Haltezustand der Verbindung anzeigende Statusinformation SI1 sowie die Rufnummer RN1 der Basisstation BS1 als Zielrufnummer der Verbindung V1 eingetragen.

Nach dem Trennen der über die Basisstation BS1 verlaufenden Verbindung sendet das mobile Endgerät ME ein Steuersignal zum Wiederaufnehmen der Verbindung über die Basisstation BS2 an die Funkvermittlungsbaugruppe FV. Diese übermittelt infolgedessen eine die Rufnummer RN2 enthaltende Steuerinformation an die Leistungsmerkmalsteuerung LMS des Vermittlungssystems VS, um dort ein Leistungsmerkmal zum Direktansprechen aus gehaltener Verbindung zu aktivieren. Die Leistungsmerkmalsteuerung LMS durchsucht im Rahmen des aktivierten Leistungsmerkmals die Verbindungstabelle VT nach der übermittelten Rufnummer RN2. Da die Rufnummer RN2 im vorliegenden Ausführungsbeispiel nicht in der Verbindungstabelle VT enthalten ist, durchsucht die Leistungsmerkmalsteuerung LMS anschließend den Teilnehmerspeicher TS nach dieser Rufnummer RN2. Im Teilnehmerspeicher TS sind für jeden im Vermittlungssystem VS registrierten Teilnehmer T1,... jeweils eine oder mehrere Rufnummern RN1, RN2,... abgespeichert, die diesem jeweiligen Teilnehmer zugeordnet sind.

Im vorliegenden Ausführungsbeispiel sind die Rufnummer RN1 der Basisstation BS1 und die Rufnummer RN2 des mobilen Endgerätes ME als einem Teilnehmer T1 zugeordnet im Teilnehmerspeicher TS abgespeichert. Nach Auffinden der Rufnummer RN1 im Teilnehmerspeicher TS wird von der Leistungsmerkmalsteuerung LMS die demselben Teilnehmer T1 zugeordnete Rufnummer RN1 ermittelt und anschließend eine erneute Suche in der Verbindungstabelle VT durchgeführt - diesmal nach der ermittelten Rufnummer RN1. Nach Auffinden der Rufnummer RN1 wird die, dieser Rufnummer in der Verbindungstabelle VT zugeordnete gehaltene Verbindung V1 im Rahmen des aktivierten Leistungsmerkmals zum Direktansprechen aus gehaltener Verbindung vom Vermittlungssystem VS zur Funkvermittlungsbaugruppe FV und von dieser über die Basisstation BS2 zum mobilen Endgerät ME durchgeschaltet. Nach erfolgter Wiederaufnahme der gehaltenen Verbindung wird die Rufnummer RN1 vom Vermittlungssystem VS für nachfolgende Verbindungsanforderungen in das erste Funknetz wieder freigegeben.

## Patentansprüche

1. Verfahren zum Basisstationswechsel bei einer von einem Vermittlungssystem (VS) über eine erste Basisstation (BS1) zu einem mobilen Endgerät (ME) verlaufenden Verbindung, bei dem
a) durch die erste Basisstation (BS1), die vom Vermittlungssystem (VS) wie ein leitungsgebundenes, einer ersten Geräteadressierungsinformation (RN1) zugeordnetes Endgerät angesteuert wird, ein Leistungsmerkmal des Vermittlungssystems (VS) aktiviert wird, wodurch die Verbindung getrennt und der ersten Geräteadressierungsinformation (RN1) zugeordnet in einen Haltezustand versetzt wird,
b) durch eine vom Vermittlungssystem (VS) über eine Funkvermittlungsbaugruppe (FV) angesteuerte, zweite Basisstation (BS2) eine erfolgte Identifizierung des mobilen Endgerätes (ME) an die Funkvermittlungsbaugruppe (FV) gemeldet wird,
c) durch die Funkvermittlungsbaugruppe (FV) eine Steuerinformation, die eine das identifizierte mobile Endgerät (ME) identifizierende, zweite Geräteadressierungsinformation (RN2) enthält, zum Wiederaufnehmen einer gehaltenen Verbindung an das Vermittlungssystem (VS) übermittelt wird,
d) vom Vermittlungssystem (VS) geprüft wird, ob die in der Steuerinformation übermittelte, zweite Geräteadressierungsinformation (RN2) einer Geräteadressierungsinformation zugeordnet ist, die einer gehaltenen Verbindung zugeordnet ist, und
e) falls die zweite Geräteadressierungsinformation (RN2) der ersten Geräteadressierungsinformation (RN1) zugeordnet ist, die der ersten Geräteadressierungsinformation (RN1) zugeordnete gehaltene Verbindung vom Vermittlungssystem (VS) zur Funkvermittlungsbaugruppe (FV) und von dieser über die zweite Basisstation (BS2) zum mobilen Endgerät (ME) durchgeschaltet wird.

2. Verfahren nach Anspruch 1,
**dadurch gekennzeichnet,**
**daß** zum Wiederaufnehmen einer gehaltenen Verbindung durch die Steuerinformation ein Leistungsmerkmal des Vermittlungssystems (VS) zum Direktansprechen aktiviert wird.

3. Verfahren nach Anspruch 1 oder 2,
**dadurch gekennzeichnet,**
**daß** nach Wiederaufnahme einer gehaltenen Verbindung die erste Geräteadressierungsinformation (RN1) für nachfolgende Verbindungsanforderungen freigegeben wird.

4. Verfahren nach einem der vorhergehenden Ansprüche,
**dadurch gekennzeichnet,**
**daß** die erste Geräteadressierungsinformation (RN1) und die zweite Geräteadressierungsinformation (RN2) in einem Teilnehmerspeicher (TS) des Vermittlungssystems (VS) einander als zum selben Teilnehmer (T1) gehörige Geräteadressierungsinformation zugeordnet sind.

5. Verfahren nach einem der vorhergehenden Ansprüche,
**dadurch gekennzeichnet,**
**daß** die erste Geräteadressierungsinformation (RN1) und die zweite Geräteadressierungsinformation (RN2) im Vermittlungssystem (VS) einander als zur selben Anrufübernahmegruppe gehörige Geräteadressierungsinformationen zugeordnet sind.

6. Verfahren nach einem der vorhergehenden Ansprüche,
**dadurch gekennzeichnet,**
**daß** zur Identifizierung des mobilen Endgerätes (ME) eine Gerätekennung des mobilen Endgerätes (ME) von diesem zur zweiten Basisstation (BS2) übertragen wird, und
anhand der übertragenen Gerätekennung die zweite Geräteadressierungsinformation (RN2) ermittelt wird.

7. Verfahren nach einem der Ansprüche 1 bis 5,
**dadurch gekennzeichnet,**
**daß** zur Identifizierung des mobilen Endgerätes (ME) die zweite Geräteadressierungsinformation (RN2) vom mobilen Endgerät (ME) zur zweiten Basisstation (BS2) übertragen wird.

8. Verfahren nach einem der vorhergehenden Ansprüche,
**dadurch gekennzeichnet,**
**daß** als Geräteadressierungsinformation jeweils eine Rufnummer (RN1, RN2) verwendet wird.

9. Verfahren nach einem der vorhergehenden Ansprüche,
**dadurch gekennzeichnet,**
**daß** die erste Basisstation (BS1) einen für das mobile Endgerät (ME) reservierten drahtlosen Übertragungskanal aufweist.

10. Verfahren nach einem der vorhergehenden Ansprüche,
**dadurch gekennzeichnet,**
**daß** die erste Basisstation (BS1) einem anderen Funknetz als die zweite Basisstation (BS2) angehört und
**daß** das mobile Endgerät (ME) für eine Verbindungsaufnahme in beiden Funknetzen eingerichtet ist.

11. Verfahren nach Anspruch 10,
**dadurch gekennzeichnet,**
**daß** die erste Basisstation (BS1) einem monozellularen Funknetz und die zweite Basisstation (BS2) einem multizellularen Funknetz angehört.

## Claims

1. Method for base station handover for a call passing from a switching system (VS) via a first base station (BS1) to a mobile terminal (ME), in which
a) Through the first base station (BS1), which is activated by the switching system (VS) as a wired terminal assigned to a first item of device addressing information (RN1), a service feature of the switching system (VS) is activated, which disconnects the call and places it in a held state assigned to the first device addressing information (RN1),
b) A completed identification of the mobile terminal (ME) is notified to the radio switching module (FV) by a second base station (BS2) activated by the switching system (VS) via radio switching module (FV),
c) Control information, which contains second device addressing information (RN2) identifying the identified mobile terminal (ME) is transferred by the radio switching module (FV) to the switching system (VS) for resuming a call,
d) A check is made by the switching system (VS) as to whether the second device addressing information (RN2) transferred in the control information is assigned to addressing information which is assigned to the held call, and
e) If the second device addressing information (RN2) is assigned to the first device addressing information (RN1), the held call assigned to the first device addressing information (RN1) is through-connected by the switching system (VS) to the radio switching module (FV) and from this via the second base station (BS2) to the mobile terminal (ME).

2. Method according to claim 1,
**characterized in that**
to resume a held call a service feature of the switching system (VS) is activated for voice calling.

3. Method in accordance with Claim 1 or 2,
**characterized in that**
after resumption of a held call the first device addressing information (RN1) is released for subsequent call requests.

4. Method in accordance with one of the previous claims,
**characterized in that**
the first device addressing information (RN1) and the second device addressing information (RN2) are assigned to each other in a subscriber memory (TS) of the switching system (VS) as device addressing information belonging to the same subscriber (T1).

5. Method in accordance with one of the previous claims,
**characterized in that**
the first device addressing information (RN1) and the second device addressing information (RN2) are assigned to each other in the switching system (VS) as device addressing information belong to the same call pickup group.

6. Method in accordance with one of the previous claims,
**characterized in that**
for identifying the mobile terminal (ME) a device identification of the mobile terminal (ME) is transmitted from this terminal to the second base station (BS2), and
the second device addressing information (RN2) is determined on the basis of the transferred device identification.

7. Method in accordance with one of the Claims 1 to 5,
**characterized in that**
for identifying the mobile terminal (ME) the second device addressing information (RN2) is transmitted from the mobile terminal (ME) to the second base station (BS2).

8. Method in accordance with one of the previous claims
**characterized in that**
a telephone number (RN1, RN2) is used as device addressing information in each case.

9. Method in accordance with one of the previous claims
**characterized in that**
the first base station (BS1) features a wireless transmission channel reserved for the mobile terminal (ME).

10. Method in accordance with one of the previous claims
**characterized in that**
the first base station (BS1) belongs to different radio network from the second base station (BS2) and
the mobile terminal (ME) is set up to accept calls in both radio networks.

11. Method in accordance with claim 10
**characterized in that**
the first base station (BS1) belongs to a mono-cellular radio network and the second base station (BS2) to a multicellular radio network.

## Revendications

1. Procédé de changement de station de base dans le cas d'une connexion allant d'un système de commutation (VS) vers un terminal mobile (ME) en passant par une première station de base (BS1), dans lequel
a) un complément de service du système de commutation (VS) est activé par la première station de base (BS1), lequel est commandé par le système de commutation (VS) comme un terminal filaire affecté à une première information d'adressage d'appareil (RN1), ce par quoi la connexion est coupée et est mise dans un état de maintien tout en étant affectée à la première information d'adressage d'appareil (RN1);
b) par une deuxième station de base (BS2) commandée par le système de commutation (VS) par l'intermédiaire d'un ensemble de commutation radio (FV), une identification du terminal mobile (ME) ayant été faite est signalée à l'ensemble de commutation radio (FV);
c) une information de commande qui contient une deuxième information d'adressage d'appareil (RN2) identifiant le terminal mobile identifié (ME) est transmise au système de commutation (VS) par l'ensemble de commutation radio (FV) pour la reprise d'une connexion maintenue;
d) le système de commutation (VS) contrôle si la deuxième information d'adressage d'appareil (RN2) transmise dans l'information de commande est affectée à une information d'adressage d'appareil qui est affectée à une connexion maintenue et
e) si la deuxième information d'adressage d'appareil (RN2) est affectée à la première information d'adressage d'appareil (RN1), la connexion maintenue affectée à la première information d'adressage d'appareil (RN1) est commutée par le système de commutation (VS) vers l'ensemble de commutation radio (FV) et, de celui-ci, vers le terminal mobile (ME) via la deuxième station de base (BS2).

2. Procédé selon la revendication 1, **caractérisé en ce que**, pour la reprise d'une connexion maintenue, un complément de service du système de commutation (VS) est activé pour adressage direct par l'information de commande.

3. Procédé selon la revendication 1 ou 2, **caractérisé en ce que**, après la reprise d'une connexion maintenue, la première information d'adressage d'appareil (RN1) est débloquée pour des demandes de connexion suivantes.

4. Procédé selon l'une des revendications précédentes, **caractérisé en ce que** la première information d'adressage d'appareil (RN1) et la deuxième information d'adressage d'appareil (RN2) sont affectées l'une à l'autre, dans une mémoire d'abonnés (TS) du système de commutation (VS), en tant qu'information d'adressage d'appareil associées au même abonné (T1).

5. Procédé selon l'une des revendications précédentes, **caractérisé en ce que** la première information d'adressage d'appareil (RN1) et la deuxième information d'adressage d'appareil (RN2) sont affectées l'une à l'autre, dans le système de commutation (VS), en tant qu'information d'adressage d'appareil associées au même groupe de prise d'appel.

6. Procédé selon l'une des revendications précédentes, **caractérisé en ce que**, pour identifier le terminal mobile (ME), un identificateur d'appareil du terminal mobile (ME) est transmis de celui-ci vers la deuxième station de base (BS2) et, à l'aide de l'identificateur d'appareil transmis, il est procédé à la détermination de la deuxième information d'adressage d'appareil (RN2).

7. Procédé selon l'une des revendications 1 à 5, **caractérisé en ce que**, pour identifier le terminal mobile (ME), la deuxième information d'adressage d'appareil (RN2) est transmise du terminal mobile (ME) vers la deuxième station de base (BS2).

8. Procédé selon l'une des revendications précédentes, **caractérisé en ce qu'**on utilise, en tant qu'information d'adressage d'appareil, respectivement un numéro d'appel (RN1, RN2).

9. Procédé selon l'une des revendications précédentes, **caractérisé en ce que** la première station de base (BS1) comporte un canal de transmission sans fil réservé au terminal mobile (ME).

10. Procédé selon l'une des revendications précédentes, **caractérisé en ce que** la première station de base (BS1) fait partie d'un autre réseau radio que la deuxième station de base (BS2) et **en ce que** le terminal mobile (ME) est équipé pour une prise en charge de connexion dans les deux réseaux radio.

11. Procédé selon la revendication 10, **caractérisé en ce que** la première station de base (BS1) fait partie d'un réseau radio unicellulaire et la deuxième station de base (BS2) fait partie d'un réseau radio multicellulaire.
